# EUROPÄISCHE PATENTSCHRIFT

(11) **EP 1 060 228 B1**
(45) Veröffentlichungstag und Bekanntmachung des Hinweises auf die Patenterteilung: **05.06.2002**
(21) Anmeldenummer: 99915527.8
(22) Anmeldetag: 17.02.1999
(51) Int. Cl.: C09K 21/14, C08L 61/04

(54) **FASERFREIE FORMTEILE**
FIBER-FREE SHAPED PARTS
PIECES MOULEES EXEMPTES DE FIBRES

(30) Priorität: 26.02.1998 DE 19808131; 09.02.1999 DE 19905153
(43) Veröffentlichungstag der Anmeldung: 20.12.2000
(73) Patentinhaber: Cognis Deutschland GmbH & Co. KG, 40589 Düsseldorf (DE); Raschig GmbH, 67061 Ludwigshafen (DE)
(72) Erfinder: GRAF, Robert, D-89281 Altenstadt (DE); KAISER, Maria-Elisabeth, D-89079 Ulm (DE); LEHR, Klaus, D-67360 Linngenfeld (DE); SIX, Wolfgang, D-67098 Bad Dürkheim (DE)
(86) Internationale Anmeldenummer: EP9901049
(87) Internationale Veröffentlichungsnummer: WO9943764

(56) Entgegenhaltungen:
- EP-A- 0 325 935
- DE-A- 3 644 468
- DE-C- 4 227 536

## Beschreibung

### Gebiet der Erfindung

Die vorliegende Erfindung befindet sich auf dem Gebiet der Brandschutzstoffe und Isolierstoffe und betrifft faserfreie Formteile, enthaltend Bindemittel und ausgewählte Füllstoffe.

### Stand der Technik

Die Verwendung von mineral-, keramik- und glasfaserhaltigen Produkten ist im Bereich der Wärmeund Schalldämmtechnik weit verbreitet. Auch im vorbeugenden baulichen Brandschutz werden große Mengen solcher Materialien, meist in Platten- oder Schalenform verwendet.

Vorteilhaft an diesen Werkstoffen ist ihr gutes Wärmeisolierungsvermögen bei gleichzeitig guter mechanischer Festigkeit. Daneben zeichnen sich diese Produkte durch die einfache Bearbeitbarkeit, das geringe Gewicht, die hohe Temperaturbeständigkeit und das günstige Eigenbrandverhalten aus. Viele dieser "Dämm-Materialien" sind als nicht-brennbare Baustoffe (Baustoffklasse A nach DIN 4102, Teil 1) oder zumindest als schwerentflammbare Baustoffe (Baustoffklasse B 1 nach DIN 4102, Teil 1) klassifiziert.

Mineral-, Keramik- und Glasfasern sind auch unter der Sammelbezeichnung MMMF-Fasem bekannt. MMMF ist die Abkürzung des englischen Begriffes "man made mineral fibres". Die toxikologische Wirkung von MMMF-Fasern ist umstritten (siehe F.W. Löffler: Aktuelle Aspekte zur Problematik der künstlichen Mineralfasern, **Keramik und Glas 2, 14 (1996)**). Abhängig von deren Längen-/Durchmesserverhältnis und deren chemischer Zusammensetzung sind eine Reihe dieser Fasern als cancerogene Arbeitsstoffe gemäß Gefahrstoffverordnung eingestuft (siehe Technische Regeln für Gefahrstoffe **TRGS 905 sowie TRGS 906).** Die Abwesenheit von Fasem ist aus arbeitshygienischen und toxikologischen Gründen von großer Wichtigkeit, da sowohl beim Verarbeiten der Formteile als auch während des Gebrauchs (durch mechanische Beanspruchung) Fasern freigesetzt werden **(VDI Kolloquium "Faserförmige Stäube", 9/93)**

Es besteht daher ein Interesse an MMMF-freien Produkten, die ein ähnliches Eigenschaftsspektrum wie das der oben genannten Werkstoffe auf Basis von Fasern besitzen. Bekannte MMMF-freie Werkstoffe sind beispielsweise Vermiculit-, Gasbeton-, Perlit-, Calciumsilikat- und Gipsprodukte. So ist zum Beispiel in der **DE-A1 3644468 (Isobloc, Hüls)** eine hochgefüllter Phenolharzschaumstoff beschrieben. Als Füllstoff wird hier Aluminiumhydroxid sowie Siliciumoxid, in Mengen von über 100 Gew.-% bezogen auf das Phenolharz. eingesetzt. Das hat zur Folge, daß die entstehenden Hartschäume entsprechend schwer sind (Dichte 350 kg/m³). Eine andere Möglichkeit stellt die Verwendung von Phenolharzen in Kombination mit Furanharzen dar, wie in der europäischen Patentanmeldung **EP-A2 0325935 (Rühl)** und den Patentschriften **DE-C1 4227536 (Rühl), DE-C1 3407512 (Rühl)** sowie der **DE-B1 2825295** beschrieben. Die dort beschriebenen Produkte setzen als Füllstoffe die Hauptkomponente Aluminiumhydroxid sowie zugemischte Mengen an Borsäure, Natriumtetraborat und Kryolith ein, weiche die Abbrandgeschwindigkeit der organischen Schaummatrix verlangsamen sollen. Nachteilig an diesen Produkten ist unter anderem ein hoher technischer Aufwand zur Vermeidung von Geruchsbelästigungen bei der Herstellung sowie Probleme bei der Einstellung der Reaktivität des Harzes. Keiner der bisher bekannten Werkstoffe stellt einen idealen Ersatz für die faserhaltigen Baustoffe dar, da die Gesamtheit der Eigenschaften von faserhaltigen Produkten nicht erreicht werden kann

Aufgabe der vorliegenden Erfindung war es deshalb, faserfreie Formteile herzustellen, die in ihrem Eigenschaftsspektrum mit faserhaltigen Werkstoffe vergleichbar sind. Dabei sollten die Ersatzstoffe insbesondere hinsichtlich ihres Gewichtes, ihrer einfachen Verarbeitbarkeit sowie ihrer einfachen Verformbarkeit unter Druck mit den faserhaltigen Werkstoffen vergleichbar sein. Besonders vorteilhaft wäre des weiteren ein günstiges Eigenbrandverhalten dieser Stoffe, so daß ihr Einsatz im vorbeugenden baulichen Brandschutz möglich ist. Selbstverständlich ist auch eine wirtschaftliche Herstellung erwünscht.

### Beschreibung der Erfindung

Gegenstand der Erfindung sind faserfreie Formteile enthaltend Bindemittel und Füllstoffe, wobei die Bindemittel ausgewählt sind aus der Gruppe der durch Zugabe von Härtem ausreagierenden Duroplasten, die gebildet wird von Epoxiden, Polyisocyanaten und furanharzfreien Phenolharzen und als Füllstoffe Feststoffmischungen aus anorganischen, hochtemperaturbeständigen Füllstoffen und thermisch aktivierbaren Quellmitteln enthalten sind.

Ein weiterer Gegenstand der Erfindung sind faserfreie Formteile enthaltend Bindemittel und Füllstoffe, wobei als Füllstoffe zusätzlich Kleber, mikroporenbildende, hochtemperaturbeständige Fullstoffe und Mahlhilfsmittel und/oder Antibackmittel enthalten sind.

Überraschenderweise wurde gefunden, daß diese Formteile die wesentlichen positiven Eigenschaften bekannter faserhaltiger Formteile, wie geringes Gewicht, einfache Bearbeitbarkeit und Verformbarkeit unter Druck aufweisen. Des weiteren weisen diese Formteile ein günstiges Eigenbrandverhalten auf. Zusätzlich sind die im Umgang mir faserhaltigen Formteilen bekannten arbeitshygienischen Anforderungen nicht relevant. Weiterhin entfallen die für faserhaltige Formteile relevanten toxikologischen Bedenken. Insbesondere bei faserfreien Formteilen, die als Bindemittel furanharzfreie Phenolharze enthalten, wurden Produkte erhalten, die sich überraschenderweise besonders einfach verarbeiten lassen: bei diesen Produkten ist eine kontrollierte Vernetzung des Bindemittels sowie eine geruchsfreie Herstellung möglich. Des weitem werden faserfreie Formteile erhalten, die bei vergleichbarem Eigenschaftsspektrum, geringere Herstellungkosten verursachen.

### Füllstoffe

In einer bevorzugten Ausführungsform wird als Füllstoff eine Feststoffmischung eingesetzt, bestehend aus

| | |
|---|---|
| 20 bis 90 | Gew.-% anorganischen, hochtemperaturbeständigen Füllstoffen |
| 1 bis 30 | Gew.-% thermisch aktivierbaren Quellmitteln |
| 0,1 bis 35 | Gew.-% Klebem |
| 2 bis 40 | Gew.-% mikroporenbildenden, hochtemperaturbeständigen Füllstoffen |
| 0,01 bis 10 | Gew.-% Mahlhilfsmitteln und/oder Antibackmitteln |

mit der Maßgabe, daß sich die Angaben zu 100 Gew.-% ergänzen.

In einer besonders bevorzugten Ausführungsform wird als Füllstoff eine Feststoffmischung eingesetzt, bestehend aus

| | |
|---|---|
| 40 bis 80 | Gew.-% anorganischen, hochtemperaturbeständigen Füllstoffen |
| 2 bis 20 | Gew.-% thermisch aktivierbaren Quellmitteln |
| 1 bis 25 | Gew.-% Klebern |
| 2,5 bis 30 | Gew.-% mikroporenbildenden, hochtemperaturbeständigen Füllstoffen |
| 0,1 bis 5 | Gew.-% Mahlhilfsmitteln und/oder Antibackmitteln |

mit der Maßgabe, daß sich die Angaben zu 100 Gew.-% ergänzen.

### Anorganische, hochtemperaturbeständige Füllstoffe

Als anorganische, hochtemperaturbeständige Füllstoffe eignen sich mineralische Stoffe wie beispielsweise Calciumcarbonat, Calciumsulfat, Ton, Aluminiumoxid, Aluminiumsilikat, Magnesiumoxid, Kieselsäure. Bevorzugt sind natürliche Aluminiumsilikate wie Kaolin, Glimmer, Feldspat und Mischungen hieraus. Diese Füllstoffe werden in der Regel in feingemahlener Form eingesetzt, wobei eine mittlere Kormgröße von 1 bis 20 µm besonders bevorzugt ist. Übliche Einsatzmengen sind 20 bis 90 Gew.-% bezogen auf die Gesamtfüllstoffmenge, besonders bevorzugt ist der Einsatz von 40 bis 80 Gew.-%.

### Thermisch aktivierbare Quellmittel

Als thermisch aktivierbare Quellmittel werden Substanzen oder Mischungen eingesetzt, die ihr Volumen im Temperaturbereich von 100 bis 1000 °C, insbesondere bei 200 bis 900 °C, um das 2- bis 100fache, insbesonderes das 10- bis 50fache, ausdehnen. Durch diese Ausdehnung wird der Volumenverlust, der durch die Zerstörung des Bindemittels bei dessen Zersetzungstemperatur eintritt, ausgeglichen. Die thermisch aktivierbaren Quellmittel tragen somit wesentlich zur Integrität der Formteile bei hohen Temperaturen bei. Solche Quellmittel sind beispielsweise nativer Vermiculit und Perlit, Blähgraphit, Natrium- oder Kaliumwasserglas. Desweiteren können als thermisch aktivierbare Quellmittel Mischungen aus Substanzen eingesetzt werden, die Phosphorsäure und/oder Oligophosphorsäure und/oder Polyphosphorsäure freizusetzen vermögen, aus kohlenstoffhaltigen Substanzen mit veresterbaren Hydroxylgruppen und Substanzen und Mischungen bestehen, die bei erhöhter Temperatur ein nichtbrennbares Gas freizusetzen vermögen. Die letztgenannten Mischungen können auch in mikroverkapselter Form eingesetzt werden. Bevorzugt werden. Quellmittelmischungen eingesetzt, deren Quellwirkung bei verschiedenen Temperaturen auftritt. Dies ist beispielsweise bei einer Mischung aus Vermiculit und Perlit der Fall: während der Vermiculit sich bereits bei Temperaturen von 250 bis 300 °C ausdehnt, tritt diese Wirkung bei Perlit erst bei 900 bis 1000 °C auf. Die Quellmittel werden üblicherweise in einer Kömung von 0,0001 bis 8 mm eingesetzt, bevorzugt ist eine Kömung von 0,0001 bis 3 mm. Bevorzugte Einsatzmengen der thermisch aktivierbaren Quellmittel sind 1 bis 30 Gew.-%, insbesondere 2 bis 20 Gew.-%, bezogen auf die Gesamtfüllstoffmenge.

### Mikroporenbildende, hochtemperaturbeständige Füllstoffe

Die mikroporenbildenden, hochtemperaturbeständigen Füllstoffe werden zugesetzt, um neben den beim Aufschäumen des Harzcompounds gebildeten Poren auch thermostabile Poren im Produkt zu erzeugen. Dies ist von besonderer Wichtigkeit. da die beim Aufschäumen des Harzcompounds gebildeten Poren organische, thermisch zersetzbare Zellwände besitzen, welche bei Temperaturen oberhalb des Zersetzungspunktes des Bindemittels zerstört werden. Die zugesetzen, hochtemperaturbeständigen Füllstoffe hingegen zeichnen sind dadurch aus, daß sie Poren bilden, die auch bei Temperaturen oberhalb der Zersetzungstemperatur des Bindemittels stabil sind. Sie erhalten somit die thermische Isolierfähigkeit der Formteile über weite Temperaturbereiche bis zu ca. 1200 °C. Geeignete Füllstoffe sind beispielsweise expandierter Perlit und Vermiculit, geblähter Ton, geblähter Graphit, Aluminiumsilikat-, Glas- und/oder Flugaschehohlkugeln, Porenbeton sowie expandiertes Wasserglas. Die mikroporenbildenen, hochtemperaturbeständigen Füllstoffe können als Einzelsubstanzen eingesetzt werden, bevorzugt ist jedoch der Einsatz in Abmischungen. Üblicherweise werde diese Füllstoffe in einer Körnung von 0,0001 bis 10 mm, bevorzugt 0,0001 bis 2 mm eingesetzt. Bevorzugte Einsatzmengen der mikroporenbildenden, hochtemperaturbeständigen füllstoffe sind 2 bis 40 Gew.-%, insbesondere 2,5 bis 30 Gew.-%, bezogen auf die Gesamtfüllstoffmenge.

### Kleber

Der eingesetzte Kleber verklebt sowohl die anorganischen, temperaturbeständigen Füllstoffe als auch die mikroporenbildenden, hochtemperaturbeständigen Füllstoffe und das Expandat der thermisch aktivierbaren Quellmittel in den Temperaturbereichen, in denen das Bindemittel diese Funktion nicht mehr erfüllt. Geeignet Kleber sind hierbei anorganische Kleber, insbesondere hochtemperaturbeständige anorganische Kleber. Für den relevanten Temperaturbereich (oberhalb der Zersetzungstemperatur des Bindemittels) geeignete Kleber sind zum Beispiel Gläser wie Natronkalkgläser, Phosphate, Borate und Mischungen hieraus. Bei den Phosphaten eigenen sich sowohl Monophosphate als auch Oligo- und Polyphosphate, insbesondere Melaminphosphat, Melamindiphosphat, Guanidinphosphat, Monoammoniumphosphat, Diammoniumphosphat, Kaliumtriphosphat, Natriumhexametaphosphat und Ammoniumpolyphosphat. Bei den Boraten sind neben den Boraten der Alkali- und Erdalkalimetalle Borate des Zinks bevorzugt. Bevorzugt ist der Einsatz von Mischungen dieser Kleber, die ihre Wirkung über einen breiten Temperaturbereich entfalten. Der Kleber wird üblicherweise in feingemahlener Form eingesetzt, wobei eine Kömung von 0,001 bis 1000 µm, insbesondere 0.001 bis 100 µm bevorzugt ist. Bevorzugte Einsatzmengen der Kleber sind 0,1 bis 35 Gew.-%, insbesondere 1 bis 25 Gew.-%, bezogen auf die Gesamtfüllstoffmenge.

### Mahlhilfsmittel und/oder Antibackmittel

Für eine problemlose Herstellung, Lagerung und Dosierung der eingesetzten Füllstoffe werden Mahlhilfsmittel und/oder Antibackmittel eingesetzt. Geeignete Mahlhilfs- und Antibackmittel sind beispielsweise hochdisperse Kieselsäuren, insbesondere pyrogene Kieselsäuren. Unter dieser Bezeichnung werden hochdisperse Kieselsäuren zusammengefaßt, die durch Flammenhydrolyse hergestellt werden. Desweiteren können Apatite und/oder Stearate, insbesondere Calium- und Aluminiumstearaten, eingesetzt werden. Vorteilhaft bei dem Einsatz von Stearaten ist die Tatsache, daß sie bei niedrigen Temperaturen Kleberwirkung entfalten. Die Mahlhilfsmittel und/oder Antibackmittel werden in der Regel in feingemahlener Form den Mischungen während des Mahlprozesses und/oder während des Mischprozesses zugesetzt. In der Regel werden sie in einer Körnung von 0,001 bis 200 µm, vorzugsweise 0,001 bis 50 µm eingesetzt. Bevorzugte Einsatzmengen der Mahlhilfsmittel und/oder Antibackmittel sind 0,01 bis 10 Gew.-%, insbesondere 0,1 bis 5 Gew.-%, bezogen auf die Gesamtfüllstoffmenge.

### pH-Wert

In einer bevorzugten Ausführungsform weist die wäßrige Aufschlämmung der Füllstoffe einen pH-Wert kleiner gleich 7,5 auf. Dies hat zum Vorteil, daß geringere Mengen an Säure als Härter eingesetzt werden müssen. Dadurch ist der Härtungsprozess schneller und ökonomischer und der entstehende Schaum hinsichtlich Zelligkeit, Dichte und Wassergehalt sowie Säuregehalt (geringere Restsäure im Endprodukt) verbessert.

Der pH-Wert der Füllstoffe wird hierbei in einer 3,0 Gew.-%igen wäßrigen Aufschlämmung bei 20 °C bestimmt.

### Bindemittel

Als Bindemittel werden die unter Zugabe von Härtem ausreagierenden Duroplaste eingeset, die ausgewählt sind aus der Gruppe bestehend aus Epoxiden, Polyisocyanaten und furanharzfreien Phenolharzen. Besonders bevorzugt ist die Verwendung von furanharzfreien Phenolharzen.

Die vorliegende Erfindung schließt die Erkenntis ein, daß bei Einsatz von furanharzfreien Phenolharzen faserfreie Formteile erhalten werden, die sich durch besonders einfache Verarbeitbarkeit bei gleichzeitig hervorragenden Eigenbrandeigenschaften auszeichnen.

Unter dem Begriff Phenolharze faßt man Kunstharze zusammen, die durch Kondensation von Phenolen. mit Aldehyden, insbesondere Formaldehyd, erhalten werden, sowie modifizierte Umsetzungsprodukte, die sich von der vorstehenden Grundreaktion ableiten lassen oder durch Addition von Phenolen an ungesättigte Verbindungen hergestellt werden. Wie in der **DIN 16916** beschrieben, unterscheidet man verschiedene Typen von Phenolharzen, wie unmodifizierte Phenolharze, Novolake, Resole, modifizierte Phenolharze und Phenol-Additionsharze. In einer besonders bevorzugten Ausführungsfrom der Erfindung werden Resole (Synonym Phenolresolharze) eingesetzt

Die zur Herstellung der erfindungsgemäßen Formteile eingesetzten, besonders bevorzugten Phenolresolharze sind an sich bekannte Harze, die durch alkalische Kondensation von Phenol und Formaldehyd erhalten werden. Die Kondensation wird dabei in an sich bekannter Weise so geführt, daß schaumfähige Phenolresolharze entstehen. In einer typischen Ausführungsform wird ein flüssiges Phenolresolharz verwendet. daß durch Kondensation von Phenol mit Formaldehyd im Molverhältnis 1:1,35 bis 1:1,9, bevorzugt 1:1,4 bis 1:1,7, besonders bevorzugt 1: 1,5, unter Verwendung von Alkaliund/oder Erdalkalimetallen als Katalysatoren hergestellt wird. Bevorzugt ist die Verwendung von Alkalimetallen, insbesondere von wäßrigen Natriumhydroxidlösungen. Die Katalysatormenge beträgt in der Regel 0,7 bis 1,5 Gew.-% bezogen auf die Phenoleinwaage, vorzugsweise 0,9 bis 1,3 Gew.-%. Die Viskosität des Phenolresolharzes beträgt in der Regel 300 bis 8000 mPas, bevorzugt 400 bis 3000 mPas. Die Bestimmung der Viskosität erfolgt mittels des Kugelfallviskosimeters bei 20 °C (Bestimmung nach Höppler). Der pH-Wert liegt üblicherweise zwischen 7,0 und 9,0, vorzugsweise zwischen 8,3 und 8,7. Das Resolharz ist frei von Furanverbindungen.

Bevorzugte Einsatzmengen der Bindemittel sind 20 bis 80 Gew.-%, insbesondere 20 bis 60 Gew.-%.

### Härter

Typische Härter für die vorgenannten Bindemittel sind Amine, Amidoamine, Säureanhydride, Säuren und Polyole. Zur Härtung der bevorzugt eingesetzen Phenolharze werden in der Regel starke anorganische und/oder organische Säuren eingesetzt. Gebräuchliche Säuren sind Salzsäure, Phosphorsäure. para-Toluolsulfonsäure, Xylolsulfonsäure und Phenolsulfonsäure. Bevorzugt sind die Sauerstoffsäuren des Phosphors und des Schwefels, wie Phosphorsäure und Schwefelsäure Besonders bevorzugt ist die Verwendung von Schwefelsäure. Wird die Herstellung eines halogenfreien Formteils gewünscht, ist dies bei der Auswahl der Säure zu berücksichtigen. Der Anteil des Härters beträgt in der Regel 0,1 bis 20 Gew.-%, insbesondere 0,5 bis 12 Cew.-%.

Ein weiterer Gegenstand der Erfindung betrifft faserfreie Formteile nach Anspruch 1, die als weitere Komponenten Emulgatoren und Treibmittel enthalten. In einer bevorzugten Ausführungsform werden die faserfreien Formteile erhalten durch Umsetzung von
10 bis 79,7 Gew.-% Bindemittel,
0,1 bis 20 Gew.-% Härtem
0,01 bis 5 Gew.-% Emulgatoren
0,1 bis 10 Gew.-% Treibmitteln
20 bis 70 Gew.-% Füllstoffen
mit der Maßgabe, daß sich die Angaben zu 100 Gew.-% ergänzen.

In einer besonders bevorzugten Ausführungsform werden die faserfreien Formteile erhalten durch die Umsetzung von
20 bis 60 Gew.-% Bindemittel,
0,5 bis 12 Gew.-% Härtem
0,1 bis 2 Gew.-% Emulgatoren
0,5 bis 5 Gew.-% Treibmitteln
25 bis 50 Gew.-% Füllstoffen
mit der Maßgabe, daß sich die Angaben zu 100 Gew.-% ergänzen.

Das Gewichtsverhältnis von Harzkörper zu Füllstoff im fertigen Formteil kann je nach Wahl der Einsatzmengen, deren Wassergehalt und dem Herstellungsprozeß beeinflußt werden. In einer besonders bevorzugte Ausführungsform weisen die faserfreien Formteile ein Gewichtsverhältnis von Harzkörper zu Füllstoff zwischen 1: 5,0 und 1: 0,1, insbesondere 1: 2,5 und 1:0,3, insbesondere zwischen 1 : 2,0 und 1 : 0,5 und vorzugsweise zwischen 1 : 1,0 und 1 : 0,5 auf.

### Treibmittel

Als Treibmittel eignen sich Stoffe, die unter dem Einfluß der anderen Mischungskomponenten Gase abspalten, wie Carbonate, Hydrogencarbonate und Ammoniumverbindungen. Daneben sind niedrigsiedende Kohlenwasserstoffe wie beispielsweise Pentan, Cyclopentan, Aceton, Petrolether, Methanol, Hexan, oder Gemische dieser Kohlenwasserstoffe, die im Bereich zwischen 40 und 90 °C sieden, geeignet. Auch halogenierte Kohlenwasserstoffe, die in diesem Temperaturbereich sieden, können als Treibmittel eingesetzt werden Dabei können diese Mittel ihre Trebwirkung entweder unter Einwirkung einer externen Heizquelle oder aufgrund der exothermen Reaktion von Bindemittel und Härter entfalten. Desweiteren sind mikroverkapselte saure oder alkalische Flüssigkeiten geeignet, deren Hülle infolge mechanischer oder chemischer Einwirkung im Herstellprozeß zerstört wird und welche dann mit den Füllstoffen unter Gasabspaltung reagieren. Der Anteil der Treibmittel beträgt in der Regel 0,1 bis 10 Gew.-%, insbesondere 0,5 bis 5 Gew.-%.

### Emulgatoren

Der Emulgator wird benötigt, um eingesetzte, unpolare Treibmittel sowie die Füllstoffe homogen in das Bindemittel einmischen zu können. Als Emulgator können ionische, nichtionische oder amphotere Verbindungen eingesetzt werden, die ein feindisperses Zerteilen des Treibmittels und/oder eine vollständige Benetzung und damit raschere Einarbeitung der Füllstoffe ermöglichen. Bevorzugt sind Alkylpolyglykoside und Fettsäurederivate wie Fettsäureamide, Fettsäureimide, Fettsäureamidoalkylbetaine und/oder Fettsäureethoxylate sowie Fettsäurepropoxylate. Besonders bevorzugt ist die Verwendung von Fettsäureethoxylaten, wie Ölsäureethoxylaten oder Rhizinusölethoxylate mit 2 bis 20 Mol Ethylenoxid. Besonders bevorzugt ist die Verwendung von Rhizinusölethoxylaten mit 15 bis 20 Mol Ethylenoxid. In einer weiteren Ausführungsform werden Ethersulfate als Emulgatoren eingesetzt; besonders bevorzugt sind Fettsäureethersulfate, insbesondere Natriumlaurylethersulfat. Die Emulgatoren können sowohl einzeln als auch in Mischungen eingesetzt werden. Üblicherweise werden 0,01 bis 5 Gew.-%, insbesondere 0,1 bis 2 Gew.-% Emulgator eingesetzt.

### Herstellung

Die Verschäumung des Bindemittels mit dem Füllstoff erfolgt nach an sich bekannter Weise. Hierzu wird das Bindemittel vorgelegt und mit dem Emulgator gut gemischt. Danach erfolgt die Zugabe der Füllstoffmischung. Unter intensivem Rühren gibt man zunächst das Treibmittel und dann den Härter zu. Die sorgfältige Vermischung der einzelnen Komponenten ist notwendig, um einen homogenen Schaum (ohne Lunker) zu erhalten. Nach der Einmischung des Härters wird der fertige Harzcompound in eine Verschäumungsform überführt. In der Regel ist diese Verschäumungsform beheizt, üblich sind Temperaturen zwischen 40 und 60 °C. Die Aushärtezeit ist abhängig von der Formgeometrie, der Reaktivität des eingesetzten Harzes, der verwendeten Säure und der Menge und Eigenschaften der Füllstoffe sowie der Formtemperatur. Übliche Verschäumungsformen sind Platten, ebenso sind auch andere Formen (Blöcke, Rohrummantelungen, Halbschalen etc.) möglich.

### Dichte

Ein weiterer Gegenstand der Erfindung betrifft die Dichte der faserfreien Formteile. Diese liegt in der Regel bei 100 bis 300 kg/m³, vorzugsweise bei 150 bis 220 kg/m³, insbesondere 180 bis 200 kg/m³.

Ein weiterer Vorteil der vorliegenden Erfindung ist das Zusammenspiel von Bindemittel, insbesondere des Phenolharzes, mit dem Kleber. Während bei Temperaturen unterhalb des Zersetzungspunktes des Bindemittels das Bindemittel für die Stabilität der Formteile sorgt, ist bei Temperaturen oberhalb des Zersetzungpunktes des Bindemittels der Kleber für diese Funktion verantwortlich. In einer bevorzugten Ausführungsform sorgen bei diesen Temperaturen zusätzlich die thermisch aktivierbaren, hochtemperaturbeständigen Quellmittel sowie die mikroporenbildenden, hochtemperaturbeständigen Füllstoffe für Stabilität. Somit ist die Stabilität und/oder Integrität der Formteile über einen weiten Temperaturbereich gewährleistet.

Ein weiterer Gegenstand der Erfindung betrifft die Verwendung der faserfreien Formteile als Brandschutzkörper und/oder als Isolier-Formkörper.

Ein weiterer Gegenstand der Erfindung betrifft die Verwendung der faserfreien Formteile als Verbundkörper. Mögliche Verbundwerkstoffe sind beispielsweise Holz, Metall und/oder Kunststoff. Auch hier sind üblichen Formen, wie beispielsweise Platten, Schalen, Halbrohe etc. möglich.

### Gewerbliche Anwendbarkeit

Die erfindungsgemäßen faserfreien Formteile besitzen mindestens gleich gute Eigenschaften wie bekannte, faserhaltige Formteile. Besondere Vorteile sind ihre einfache Bearbeitbarkeit sowie Verformbarkeit unter Druck. Zusätzlich sind die im Umgang mir faserhaltigen Formteilen bekannten arbeitshygienischen Anforderungen nicht relevant. Weiterhin entfallen die für faserhaltige Formteile relevanten toxikologischen Bedenken. Ein Ersatz der faserhaltigen Formteile in praktisch allen Anwendungsgebieten ist somit möglich. Besonders geeignet sind sie zur Herstellung von Brandschutzkörpem sowie zur Herstellung von Isolier-Formkörpern. Sie können dabei in beheiggen, an sich bekannten Formen, wie Platten, Schalen, Halbrohren etc. hergestellt werden.

### Beispiele

### Beispiel 1a

In einen Rührbehälter wurden 52 Gew.-% eines Phenolresolharzes (Molverhältnis Phenol zu Formaldehyd 1:1,5; Katalysator: 0,95 Gew.-% wäßrige Natriumhydroxidlösung bezogen auf die Phenoleinwaage, 1800-2000 mPas) mit einer Trockensubstanz von 75 Gew.-% vorgelegt. Unter Rühren gab man 0,8 Gew.-% eines Natriumlaurylethersulfates hinzu. Nach dem Homogenisieren wurden 36 Gew.-% einer Füllstoffmischung (siehe Tabelle 1) allmählich unter Rühren zugegeben, so daß eine viskoser Harzcompound entsteht. Zu diesem Harzcompound gab man unter weiterem, intensivem Mischen 1,5 Gew.-% Pentan. Nach vollständigem Homogenisieren wurden schließlich 9,7 Gew.-% einer 45 gew.-%igen wässrigen Schwefelsäurelösung zugegeben. Die homogenisierte Mischung wird in eine auf 60 °C vorgeheizte Stahlform gegossen, wobei die Einwaage des Compounds in Relation zum Volumen der Form so gewählt wurde, daß eine Dichte des Endproduktes vom 180 kg/m³ erreicht wurde. Die Form wurde nach dem Einfüllen des Compounds geschlossen. Die Reaktionszeit dieser Mischung betrug ca. 4 Stunden. Nach dem Abkühlen der Form konnte der ausgehärtete Schaumblock entnommen und zu Formteilen geschnitten werden.

### Beispiel 1b

Beispiel 1a wurde wiederholt, jedoch wurde folgendes Phenolresolharz eingesetzt: Molverhältnis Phenol zu Formaldehyd 1: 1,4; Katalysator 1,1 Gew.-% wäßrige Natriumhydroxidlösung, 7400 mPas.

### Beispiel 1c

Beispiel 1a wurde wiederholt, jedoch wurde folgendes Phenolresolharz eingesetzt Molverhältnis Phenol zu Formaldehyd 1: 1,6; Katalysator 1,3 Gew.-% wäßrige Natriumhydroxidlösung, 5500 mPas.

### Beispiel 1d

Beispiel 1a wurde wiederholt, jedoch wurde folgendes Phenolresolharz eingesetzt: Molverhältnis Phenol zu Formaldehyd 1: 1,7; Katalysator 1,1 Gew.-% wäßrige Natriumhydroxidlösung, 500 mPas.

**Tab. 1:**

| Füllstoffmischung zu Beispielen 1a, 1b, 1c und 1d | | | |
|---|---|---|---|
| Funktion | Komponente | Gew.-%¹ | Mittlere Kömung [µm] |
| anorganischer, hochtemperaturbeständiger Füllstoff | Kaolin | 75,4 | 3 |
| thermisch aktivierbares Quellmittel Kleber | Nativer Vermiculit | 9,8 | 0,001-3000 |
| | Melaminphosphat | 2,4 | 20 |
| | Zinkborat | 2,4 | 5 |
| Mikroporenbildender, hochtemperaturbeständiger Füllstoff | Glashohlkugeln | 9,8 | 0,001-100 |
| Mahlhilfsmittel und/oder Antibackmittel | Calciumstearat | 0,2 | 10 |

| | | | |
|---|---|---|---|
| ¹Mengenangaben in Gew.-% bezogen auf Gesamtfüllstoffmenge | | | |

### Beispiel 2a

In einen Rührbehälter wurden 58 Gew.-% eines Phenolresolharzes (Molverhältnis Phenol zu Formaldehyd 1:1,5; Katalysator: 0,95. Gew.-% wäßrige Natriumhydroxidlösung bezogen auf die Phenoleinwaage, 1800-2000 mPas) mit einer Trockensubstanz von 70 Gew.-% vorgelegt. Unter Rühren gab man 0,6 Gew.-% eines Rizinusölethoxylates mit 20 Mol Ethylenoxid hinzu. Nach dem Homogenisieren wurden 32 Gew.-% einer Füllstoffmischung (siehe Tabelle 2) allmählich unter Rühren zugegeben, so daß eine viskoser, homogener Harzcompound entsteht. Zu diesem Harzcompound gab man unter weiterem, intensivem Mischen 1,8 Gew.-% Pentan. Nach vollständigem Homogenisieren wurden schließlich 7,6 Gew.-% einer 50 gew.-%igen wässrigen Schwefelsäurelösung zugegeben. Die homogenisierte Mischung wurde in eine auf 55 °C vorgeheizte Stahlform gegossen, wobei die Bnwaage des Compounds in Relation zum Volumen der Form so gewählt wurde, daß eine Dichte des Endproduktes vom 200 kg/m³ erreicht wurde. Die Form wurde nach dem Einfüllen des Compounds geschlossen. Nach einer Reaktionszeit von 5 Stunden und dem anschließenden Abkühlen der Form konnte der ausgehärtete Schaumblock entnommen und zu Formteilen geschnitten werden.

### Beispiel 2b

Beispiel 2a wurde wiederholt, jedoch wurde folgendes Phenolresolharz eingesetzt: Molverhältnis Phenol zu Formaldehyd 1: 1,4; Katalysator 1,1 Gew.-% wäßrige Natriumhydroxidlösung, 7400 mPas.

### Beispiel 2c

Beispiel 2a wurde wiederholt, jedoch wurde folgendes Phenolresolharz eingesetzt: Molverhältnis Phenol zu Formaldehyd 1: 1,6; Katalysator 1,3 Gew.-% wäßrige Natriumhydroxidlösung, 5500 mPas.

### Beispiel 2d

Beispiel 2a wurde wiederholt, jedoch wurde folgendes Phenolresolharz eingesetzt: Molverhältnis Phenol zu Formaldehyd 1: 1,7; Katalysator 1,1 Gew.-% wäßrige Natriumhydroxidlösung, 500 mPas.

**Tab. 2:**

| Füllstoffmischung zu Beispielen 2a, 2b, 2c und 2d | | | |
|---|---|---|---|
| Funktion | Komponente | Gew.-%¹ | mittlere Körnung [µm] |
| anorganischer, hoch temperaturbeständiger Füllstoff | Kaolin | 40 | 3 |
| thermisch aktivierbares Quellmittel | Glimmer | 30 | 0-50 |
| | Blähgraphit | 8,8 | 0-2000 |
| | Nativer Vermiculit | 1,5 | 0-3000 |
| | Nativer Perlit | 1,5 | 0-3000 |
| Kleber | Melaminphosphat | 3,0 | 0-100 |
| | Ammoniumpolyphosphat | 3,0 | 0-100 |
| mikroporenbildender, hochtemperaturbeständiger Füllstoff | expandierter Perlit | 6,0 | 0-3000 |
| | expandierter Vermiculit | 3,0 | 0-4000 |
| | Flugaschehohlkugeln | 3,0 | 0-1000 |
| Mahlhilfsmittel und/oder Antibackmittel | pyrogene Kieselsäure | 0.2 | 0-50 |

| | | | |
|---|---|---|---|
| ¹ Mengenangaben in Gew.-% bezogen auf Gesamtfüllstoffmenge | | | |

### Beispiel 3a

In einen Rührbehälter wurden 54,8 Gew.-% eines Phenolresolharzes (Molverhältnis Phenol zu Formaldehyd 1:1,5; Katalysator 0,95 Gew.-% wäßrige Natriumhydroxidlösung bezogen auf die Phenoleinwaage, 1800-2000 mPas) mit einer Trockensubstanz von 70 Gew.-% vorgelegt Unter Rühren gab man 0,6 Gew.-% eines Rizinusölethoxylates mit 20 Mol Ethylenoxid hinzu. Nach dem Homogenisieren wurden 36,2 Gew.-% einer Füllstoffmischung (siehe Tabelle 3) allmählich unter Rühren zugegeben, so daß eine viskoser, homogener Harzcompound entstand. Zu diesem Harzcompound gab man unter weiterem, intensivem Mischen 1,2 Gew.-% Pentan. Nach vollständigem Homogenisieren wurden schließlich 7,2 Gew.-% einer 50 gew.-%igen wäßrigen Schwefelsäurelösung zugegeben. Die homogenisierte Mischung wurde in eine auf 55 °C vorgeheizte Stahlform gegossen, wobei die Einwaage des Compounds in Relation zum Volumen der Form so gewählt wurde, daß eine Dichte des Endproduktes vom 200 kg/m³ erreicht wurde. Die Form wurde nach dem Einfüllen des Compounds geschlossen. Nach einer Reaktionszeit von 5 Stunden und dem anschließenden Abkühlen der Form konnte der ausgehärtete Schaumblock entnommen und zu Formteilen geschnitten werden.

### Beispiel 3b

Beispiel 3a wurde wiederholt, jedoch wurde folgendes Phenolresolharz eingesetzt: Molverhältnis Phenol zu Formaldehyd 1: 1,4; Katalysator 1,1 Gew.-% wäßrige Natriumhydroxidlösung, 7400 mPas.

### Beispiel 3c

Beispiel 3a wurde wiederholt, jedoch wurde folgendes Phenolresolharz eingesetzt: Molverhältnis Phenol zu Formaldehyd 1: 1,6; Katalysator 1,3 Gew.-% wäßrige Natriumhydroxidlösung, 5500 mPas.

### Beispiel 3d

Beispiel 3a wurde wiederholt, jedoch wurde folgendes Phenolresolharz eingesetzt Molverhältnis Phenol zu Formaldehyd 1: 1,7; Katalysator 1,1 Gew.-% wäßrige Natriumhydroxidlösung, 500 mPas.

Unter der Annahme eines durchschnittlichen Wassergehaltes von 13,0% im Harz, ergibt sich für die nach den Beispielen 3 a bis d erhaltenden Formkörper ein Gewichtsverhältnis von Harzkörper zu Füllstoff von 1:0,8.

**Tab. 3:**

| Füllstoffmischung zu Beispielen 3a, 3b, 3c und 3d | | | |
|---|---|---|---|
| Funktion | Komponente | Gew.-%¹ | Mittlere Körnung [µm] |
| anorganischer, hoch temperaturbeständiger Füllstoff | Kaolin | 75,4 | 3 |
| thermisch aktivierbares Quellmittel | Blähgraphit | 9,7 | 0,001-2000 |
| Kleber | Ammoniumpolyphosphat | 5,0 | 0,001-100. |
| mikroporenbildender, hochtemperaturbeständiger Füllstoff | Aluminiumsilikathohlkugeln | 9,4 | 0,001-2000 |
| Mahlhilfsmittel und/oder Antibackmittel | gefällte Kieselsäure | 0,5 | 0,001-50 |

| | | | |
|---|---|---|---|
| ¹Mengenangaben in Gew.-% bezogen auf Gesamtfüllstoffmenge | | | |

### Brandschutzeigenschaften und mechanische Bearbeitbarkeit

Aus den Schaumblöcken nach Beispielen 1, 2 und 3 (jeweils a bis d) wurden 6 cm dicke Platten geschnitten und einem Kleinbrandversuch nach DIN 4102 unterzogen. In allen Fällen wurde eine Feuerwiderstandsfähigkeit von mehr als 90 Minuten erreicht. Die Platten besaßen gute mechanische Festigkeit bei gleichzeitiger einfacher Bearbeitbarkeit mit Schneidwerkzeugen.

## Patentansprüche

1. Faserfreie Formteile, enthaltend Bindemittel und Füllstoffe, **dadurch gekennzeichnet, daß** die Bindemittel ausgewählt sind aus der Gruppe der durch Zugabe von Härtem ausreagierenden Duroplasten, die gebildet wird von Epoxiden, Polyisocyanaten und furanharzfreien Phenolharzen und als Füllstoffe Feststoffmischungen aus anorganischen, hochtemperaturbeständigen Füllstoffen und thermisch aktivierbaren Quellmitteln enthalten sind.

2. Faserfreie Formteile, nach Anspruch 1, **dadurch gekennzeichnet, daß** als Füllstoffe zusätzlich Kleber, mikroporenbildendene, hochtemperaturbeständigene Füllstoffe und Mahlhilfsmittel und/oder Antibackmittel enthalten sind.

3. Faserfreie Formteile nach den Ansprüchen 1 und 2, **dadurch gekennzeichnet, daß** eine wäßrige Aufschlämmung der Füllstoffe einen pH-Wert kleiner gleich 7,5 aufweist.

4. Faserfreie Formteile nach den Ansprüchen 1 bis 3, **dadurch gekennzeichnet, daß** der Füllstoff eine Feststoffmischung ist, bestehend aus
20 bis 90 Gew.-% anorganischen, hochtemperaturbeständigen Füllstoffen,
1 bis 30 Gew.-% thermisch aktivierbaren Quellmitteln,
0,1 bis 35 Gew.-% Klebern,
2 bis 40 Gew.-% mikroporenbildenden, hochtemperaturbeständigen Füllstoffen sowie
0,01 bis 10 Gew.-% Mahlhilfsmitteln und/oder Antibackmitteln
mit der Maßgabe, daß sich die Angaben zu 100 Gew.-% ergänzen.

5. Faserfreie Formteile nach den Ansprüchen 1 bis 4, **dadurch gekennzeichnet, daß** sie als weitere Komponente Härter enthalten.

6. Faserfreie Formteile nach den Ansprüchen 1 bis 5, **dadurch gekennzeichnet, daß** sie als weitere Komponenten Emulgatoren und Treibmittel enthalten.

7. Faserfreie Formteile nach den Ansprüchen 1 bis 6, **dadurch gekennzeichnet, daß** sie erhalten werden durch Umsetzung von
10 bis 79,7 Gew.-% Bindemittel,
0,1 bis 20 Gew.-% Härter,
0,01 bis 5 Gew.-% Emulgator,
0,1 bis 10 Gew.-% Treibmittel sowie
20 bis 70 Gew.-% Füllstoffe
enthalten mit der Maßgabe, daß sich die Angaben zu 100 Gew.-% ergänzen.

8. Faserfreie Formteile nach den Ansprüchen 1 bis 7, **dadurch gekennzeichnet, daß** sie als Bindemittel furanharzfreie Phenolharze enthalten.

9. Faserfreie Formteile nach den Ansprüchen 1 bis 8, **dadurch gekennzeichnet, daß** sie als Bindemittel furanharzfreie Phenolresolharze enthalten.

10. Faserfreie Formteile nach den Ansprüchen 1 bis 9, **dadurch gekennzeichnet, daß** die Formteile eine Dichte von 100 bis 300 kg/m³ aufweisen.

11. Verwendung der faserfreien Formteile nach den Ansprüchen 1 bis 10 zur Herstellung von Brandschutzkörpem.

12. Verwendung der faserfreien Formteile nach den Ansprüchen 1 bis 10 zur Herstellung von Isolier-Formkörpem.

13. Verwendung der faserfreien Formteile nach den Ansprüchen 1 bis 10 zur Herstellung von Verbundkörpem.

## Claims

1. Fibre-free mouldings containing binders and fillers, **characterized in that** the binders are selected from the group of thermosets reacting out by addition of hardeners which consists of epoxides, polyisocyanates and furane-resin-free phenolic resins and **in that** solid mixtures of inorganic, high-temperature-resistant fillers and heat-activatable swelling agents are present as fillers.

2. Fibre-free mouldings as claimed in claim 1, **characterized in that** adhesives, micropore-forming high-temperature-resistant fillers and grinding aids and/or anticaking agents are additionally present as fillers.

3. Fibre-free mouldings as claimed in claims 1 and 2, **characterized in that** an aqueous suspension of the fillers has a pH of or below 7.5.

4. Fibre-free mouldings as claimed in claims 1 to 3, **characterized in that** the filler is a solid mixture consisting of
20 to 90% by weight of inorganic high-temperature-resistant fillers,
1 to 30% by weight of heat-activatable swelling agents,
0.1 to 35% by weight of adhesives,
2 to 40% by weight of micropore-forming high-temperature-resistant fillers and
0.01 to 10% by weight of grinding aids and/or anticaking agents,
with the proviso that the quantities add up to 100% by weight.

5. Fibre-free mouldings as claimed in claims 1 to 4, **characterized in that** they contain hardener as another component.

6. Fibre-free mouldings as claimed in claims 1 to 5, **characterized in that** they contain emulsifiers and blowing agents as further components.

7. Fibre-free mouldings as claimed in claims 1 to 6, **characterized in that** they are obtained by reaction of
10 to 79.7% by weight of binder,
0.1 to 20% by weight of hardeners,
0.01 to 5% by weight of emulsifiers,
0.1 to 10% by weight of blowing agents,
20 to 70% by weight of fillers,
with the proviso that the quantities add up to 100% by weight.

8. Fibre-free mouldings as claimed in claims 1 to 7, **characterized in that** they contain furane-resin-free phenolic resins as binders.

9. Fibre-free mouldings as claimed in claims 1 to 8, **characterized in that** they contain furane-resin-free phenol resol resins as binders.

10. Fibre-free mouldings as claimed in claims 1 to 9, **characterized in that** they have a density of 100 to 300 kg/m³.

11. The use of the fibre-free mouldings claimed in claims 1 to 10 for the production of fire-retardant mouldings.

12. The use of the fibre-free mouldings claimed in claims 1 to 10 for the production of insulating mouldings.

13. The use of the fibre-free mouldings claimed in claims 1 to 10 for the production of composite materials.

## Revendications

1. Pièces moulées dépourvues de fibres, contenant des agents liants et des substances de charge,
**caractérisées en ce que**
les agents liants sont choisis dans le groupe des duroplastes qui réagissent complètement par addition d'une résine, qui est formé des époxydes, des polylsocyanates, et des résines phénoliques exemptes de résine furanique, et les pièces contiennent comme substances de charge des mélanges de matières solides à base de substances minérales stables aux hautes températures et d'agents gonflants activables par la chaleur.

2. Pièces moulées dépourvues de fibres selon la revendication 1,
**caractérisées en ce que**
comme substances de charge elles contiennent en supplément des colles, des substances de charge formant des micropores stables aux hautes températures et des adjuvants de broyage et/ou des agents antibactériens.

3. Pièces moulées dépourvues de fibres selon les revendications 1 et 2,
**caractérisées en ce qu'**
une suspension aqueuse des substances de charge possède une valeur de pH inférieure ou égale à 7,5.

4. Pièces moulées dépourvues de fibre selon les revendications 1 à 3,
**caractérisées en ce que**
la substance de charge est un mélange de matières solides consistant en :
- de 20 à 90% en poids de substances de charge minérales, stables aux hautes températures
- de 1 à 30 % en poids d'agents gonflants activables par la chaleur
- de 0,1 à 35 % en poids de colles
- de 2 à 40 % en poids de substances de charges stables aux hautes températures formant des micropores et
- de 0,01 à 10 % en poids d'adjuvants de broyage et/ou d'agents antiagglomération
- les données se complétant à 100 % en poids.

5. Pièces moulées dépourvues de fibre, selon les revendications 1 à 4,
**caractérisées en ce qu'**
elles contiennent comme autre composant, un agent durcisseur.

6. Pièces moulées dépourvues de fibre selon les revendications 1 à 5,
**caractérisées en ce qu'**
elles contiennent comme autres composants des agents émulsionnants et des agents propulseurs.

7. Pièces moulées dépourvues de fibres selon les revendications 1 à 6,
**caractérisées en ce que**
on les obtient contenues, par réaction de
- 10 à 79,7 % en poids d'agent liant
- de 0,1 à 20 % en poids d'un durcisseur
- de 0,01 à 5 % en poids d'agent émulslonnant
- 0,1 à 10 % en poids d'agent gonflant
- ainsi que de 20 à 70 % en poids de substances de charge
- les données se complétant à 100 % en poids.

8. Pièces moulées dépourvues de fibres selon les revendications 1 à 7,
**caractérisées en ce qu'**
elles renferment comme agent liant, des résines phéholiques dépourvues de résine furahique.

9. Pièces moulées dépourvues de fibre selon les revendications 1 à 8,
**caractérisées en ce que**
elles renferment comme agent liant des résines résoliques phénoliques dépourvues de résine furanique.

10. Pièces moulées dépourvues de fibre selon les revendications 1 à 9,
**caractérisées en ce que**
les pièces moulées possèdent une densité de 100 à 300 kg/m³.

11. Utilisation des pièces moulées dépourvues de fibre, selon les revendications 1 à 10,
en vue de la préparation de corps protecteurs contre l'incendie.

12. Utilisation de pièces moulées dépourvues de fibre selon les revendications 1 à 10,
en vue de la préparation de solides moulés isolants.

13. Utilisation des pièces moulées dépourvues de fibre selon les revendications 1 à 10, en vue de la préparation de solides composites.
